# EUROPEAN PATENT APPLICATION

(11) **EP 2 280 467 A2**
(43) Date of publication of application: **02.02.2011**
(21) Application number: 10170816.2
(22) Date of filing: 26.07.2010
(51) Int. Cl.: H02G 5/10

(54) **Cooling system and method for current carrying conductor**

(30) Priority: 31.07.2009 US 533175
(71) Applicant: General Electric Company, Schenectady, NY 12345 (US)
(72) Inventor: Subramaniam, Pradip Radhakrishnan, 560066 Bangalore (IN); Asokan, Thangavelu, 560066 Bangalore (IN); Reddy, Sudhakar Eddula, 560066 Bangalore (IN); Bohori, Adnan Kutubuddin, 560066 Bangalore (IN); Kumar, Vijay, 560066 Bangalore (IN); Kumar, Anubhav, 560066 Bangalore (IN)
(74) Representative: Illingworth-Law, William Illingworth

(57) **Abstract**

A cooling mechanism for a current carrying conductor is proposed. The mechanism includes a first layer having plurality of micro fluidic channels. The first layer is thermally coupled to the current carrying conductor and configured to exchange thermal energy. A micro-pump is configured to circulate a heat exchange fluid through the micro fluidic channels to exchange thermal energy with the first layer and remove heat from the current carrying conductor. The heat exchange fluid and the current carrying conductor are electrically isolated.

## Description

### BACKGROUND

The subject matter disclosed herein generally relates to thermal management and particularly to thermal management of current carrying conductors.

Power distribution in a high current environment requires current flow from a power supply to various components, for example, drive systems, motors, electrical loads, amplifiers, rectifiers, routers, servers, etc. Among the more common methods used to supply power are heavy gauge wire and cable, switchgears, circuit boards, and bus bars.

Typically, power distribution has involved one or more heavy copper bus bars that are provided with connectors or holes for connecting cables. Bus bars might be spaced apart from each other and isolated by insulating spacers. Large copper or aluminum bus bars and cables have been used to distribute power within industrial control systems. Such bus bars are large and can carry high power relatively easily. Traditionally, bus bars cooling techniques involved circulating air within a cabinet to cool the bus bars. In systems requiring isolation, bus bars are located remotely and coupled via cables to other components. However, cables are capable of handling lesser power compared to the bus bars. Efficient power distribution systems require higher operating current densities such that more power is distributed within the system. Additionally, increasing the power density through the bus bars has challenges such as airflow and ventilation, vibration, noise, and efficient use of space.

It would be desirable to provide a cooling system for conductors such as bus bars that increase the current carrying capacity of the bus bar, while reducing its size, thereby saving space and weight.

### BRIEF DESCRIPTION

Briefly, a cooling mechanism for a current carrying conductor is proposed. The mechanism includes a first layer having plurality of micro fluidic channels. The first layer is thermally coupled to the current carrying conductor and configured to exchange thermal energy. A micro-pump is configured to circulate a heat exchange fluid through the micro fluidic channels to exchange thermal energy with the first layer and remove heat from the current carrying conductor. The heat exchange fluid and the current carrying conductor are electrically isolated.

In another embodiment, a heat exchanger to cool a current carrying conductor is presented. The heat exchanger includes a heat exchange layer thermally coupled to the current carrying conductor and having one of more micro-channels. A fluid path is defined within the micro-channels to transmit a heat exchange fluid. Plurality of air voids is disposed around the micro-channels in thermal communication with the fluid path. A self-regulating pump is configured to circulate the heat exchange fluid through the fluid path.

In another embodiment, a method of cooling a current carrying conductor is presented. The method include coupling a heat exchange layer around the current carrying conductor, the heat exchange layer thermally coupled to the current carrying conductor and electrically isolated from the current carrying conductor. The method further includes providing a fluid path via plurality of micro-fluidic channels defined in the heat exchange layer having open porous structure and circulating a heat exchange fluid having a phase changing material within the fluid path. The method further includes cooling heat from the current carrying conductor by thermal exchange through the heat exchange layer and cooling the heat exchange layer via circulating the heat exchange fluid in micro-fluidic channels coupled to air voids.

### DRAWINGS

These and other features, aspects, and advantages of the present invention will become better understood when the following detailed description is read with reference to the accompanying drawings in which like characters represent like parts throughout the drawings, wherein:

FIG. 1 is a schematic diagram of an exemplary electrical distribution system implementing a cooling mechanism according to an embodiment of the invention;

FIG. 2 illustrates a section of the bus bar in FIG. 1;

FIG. 3 illustrates a cross-sectional view of the current carrying conductor in FIG. 2;

FIG. 4 illustrates a detailed view of the first layer in FIG. 3; and

FIG. 5 illustrates an exemplary non-contact power supply implemented in the cooling mechanism of FIG. 2.

### DETAILED DESCRIPTION

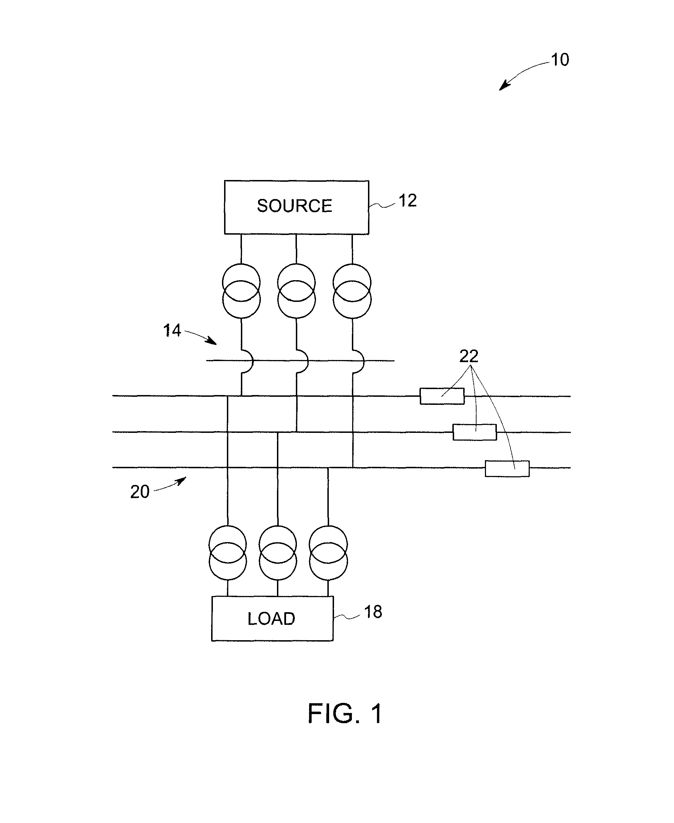

FIG. 1 is a schematic diagram of an exemplary electrical distribution system implementing a cooling mechanism according to an embodiment of the invention. Electrical distribution system 10 includes an electrical power source 12, protective device 14, bus bars 20, load 18, and cooling mechanism 22. In an exemplary embodiment a cooling mechanism 22 is implemented on the bus bars 20 according to an aspect of the invention. An example of an electrical power source 12 includes a generator configured to deliver electrical power through a protective device 14 to bus bars 20. An example of a protective device 14 includes a circuit breaker. A load 18 receives electrical power from the source 12 via the bus bars 20.

Typically, factors that limit a current carrying capacity of the bus bar are temperature rise that increases the resistance (due to heat) from the flow of electrical energy. Such increased temperatures and increase in resistance may lead to decreased current carrying capacity in the bus bars. Traditional approach to cool the bus bars include natural cooling, forced cooling techniques such as blowing air to achieve higher current density across the cross-section of the bus bar conductor. Other known techniques implement heat sink structures to dissipate heat by natural convection or forced convection. However, such approaches have marginal effect on the current carrying capacity. Further, such cooling methods require major modification when implemented in presently operational systems. Systems employing forced liquid cooling employ a conventional vapor compression refrigeration cycle or bulky cooling apparatus such as evaporator, condenser, or compressor. Certain embodiments of the invention disclose a retro-fit cooling mechanism 22 for bus bars, than needs minimal changes in the system design, and enable an increase in the current carrying capacity of the bus bar for a given cross-section and temperature rise.

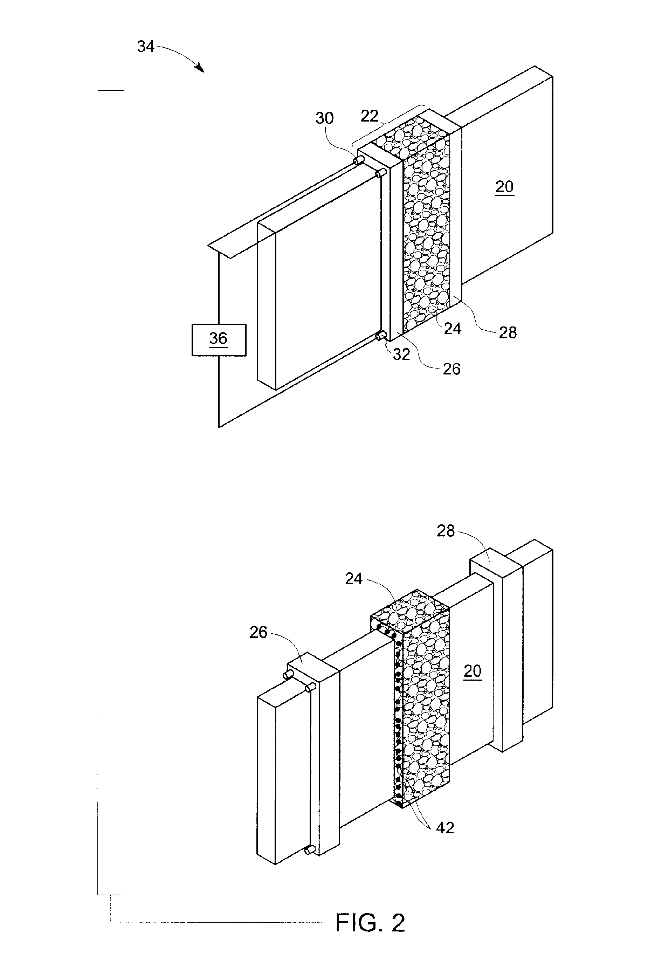

FIG. 2 illustrates a section of the bus bar in FIG. 1. The cooling mechanism 22 includes a first layer 24 having plurality of micro fluidic channels 42. In an exemplary embodiment, the first layer comprises an open porous structure having multiple air voids. The first layer 24 (or heat exchange layer) is thermally coupled to the current carrying conductor 20 and configured to exchange thermal energy with the conductor 20. However, the first layer 24 is electrically isolated from the current carrying conductor 20. A heat exchange fluid (not shown) is configured to flow through the micro fluidic channels 42.

In one embodiment the heat exchange fluid is configured for non-contact type circulation wherein the heat exchange fluid and the current carrying conductor are isolated. However, heat exchange fluid in certain embodiment, may be designed for contact type circulation wherein the dielectric breakdown voltage of the heat exchange fluid is configured to be higher than operating voltage to the conductor 20. A phase change material may be included within the heat exchange fluid. The phase change material include for example, inorganic or organic salts and the mixture forming a colloidal solution or slurry. Further the heat exchange fluid is configured to provide good surface contact with the first layer that may be hydrophobic or hydrophilic.

Still referring to FIG. 2, a micro pump 36 is coupled to the fluid duct 30, 32 and configured to circulate the heat exchange fluid within the first layer 24. In one embodiment, a non-contact power supply (not shown) is configured to supply power to the micro-pump 36. Reference numeral 34 illustrates an exemplary embodiment of the cooling mechanism 22 configured to retrofit into an existing bus bar that is part of presently operational system. The end plates 26, 28 include fluid duct 30, 32 configured to guide the heat exchange fluid into the fluid path within the micro fluidic channels 42.

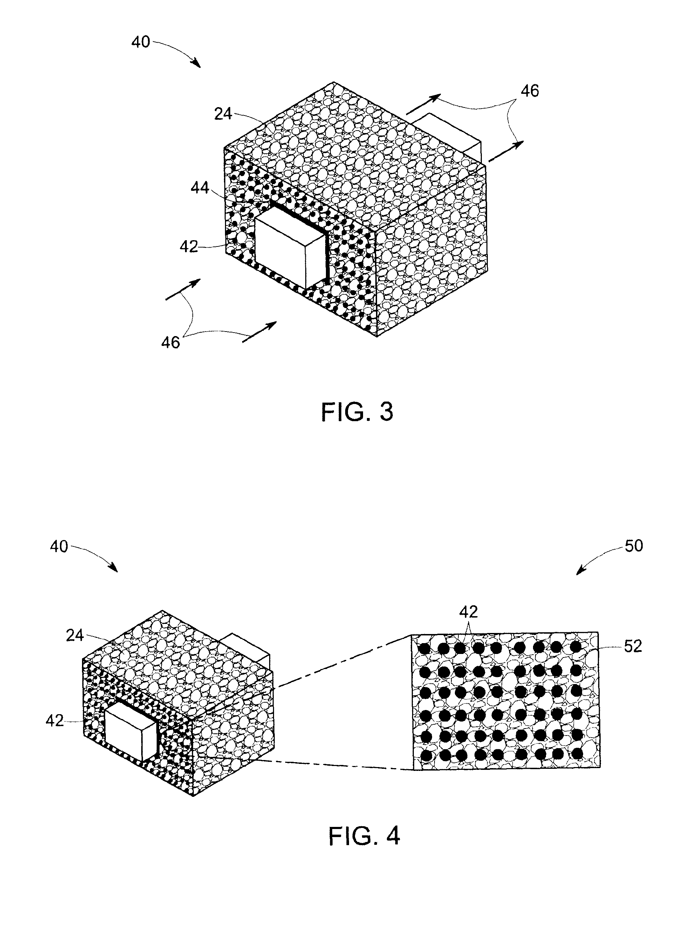

FIG. 3 illustrates a cross-sectional view of the current can-ying conductor and the first layer in FIG. 2. The cross-sectional view 40 illustrates the conductor 20 thermally coupled to the first layer 24 via an interface layer 44. The interface layer 44 is thermally conducting and electrically insulating. Non-limiting examples of layer 44 include a paste, a strip, or a coating. Multiple micro fluidic channels 42 are defined within the first layer 24. A fluid path 46 is defined within the micro fluidic channels 42 and configured to transmit the heat exchange fluid. Micro fluidic channels 42 and air voids are hydraulically insulated such that the fluid path 46 is confined within the micro fluidic channels. However, micro fluidic channels 42 and the air voids are in thermal communication and micro fluidic channels 42 are cooled via the air voids that interact with the ambient.

In an exemplary operation, the current carrying conductor 20 carrying high amperage current result in generation of heat. As discussed above, if not cooled appropriately, the conductor 20 may develop excess heat that in turn reduces the current carrying capacity. In one embodiment, the first layer 24 absorbs the thermal energy from the conductor 20 that is facilitated by the interface layer 44. The micro fluidic channels 42 disposed within the first layer 24 are configured to carry a heat exchange fluid such as, for example, a colloidal mixture or an aqueous mixture.

In one embodiment the heat exchange fluid includes a phase change material. The current carrying conductor 20 may be subjected to peak current for short duration resulting in excessive heat generation. Phase change material is configured to change from a solid state to a liquid state or alternatively, from a liquid state to a vapor state during short intervals of excessive high temperature. Such change in phase results in effective cooling due to absorption of heat by the phase change material in the form of latent heat from the conductor 20. Further, the phase change material may return to original state during normal operation wherein thermal energy stored in the form of latent heat. The latent heat is stored within the phase change material once lower temperature is attained. In one embodiment, the heat exchange fluid and the current carrying conductor are electrically isolated. In another embodiment, the heat exchange fluid may be in contact with the conductor 24. In such scenario, the heat exchange fluid is designed to have a higher dielectric strength than the voltage handled by the conductor 24. A micro-pump (not shown) is configured to circulate the heat exchange fluid through the micro fluidic channels to exchange thermal energy with the first layer and cool the first layer. The micro fluidic channels in turn are cooled by the air voids around the channels and dissipate heat to the ambient. It may be noted that such self condenser mechanism for cooling, as described above, remove heat from the current carrying conductor effectively without requiring a separate condenser unit thus saving cost and space.

FIG. 4 illustrates a detailed view of the first layer in FIG. 3. Zoomed in view 50 of the first layer 24 illustrates open porous structure of first layer 24 having air voids 52 disposed around the micro fluidic channels 42. Pore density (defined as pores per inches) of the first layer 24 is designed by selection of material to include about 3 pores per inch to about 10 pores per inch. Further the first layer includes properties such as electrical insulation to provide better isolation between the heat exchange fluid and the conductor. However, the first layer is configured to have good thermal conduction to transfer heat effectively. In an exemplary embodiment the micro fluidic channels 42 may include dimensions of about 100 microns to about 2000 microns in diameter. Such foam structures comprise high thermal conductivity with respect to weight. Further, foam structures have light weight due to open porous and provide large surface area (through open pore voids) and higher liquid side surface area via micro fluidic channels.

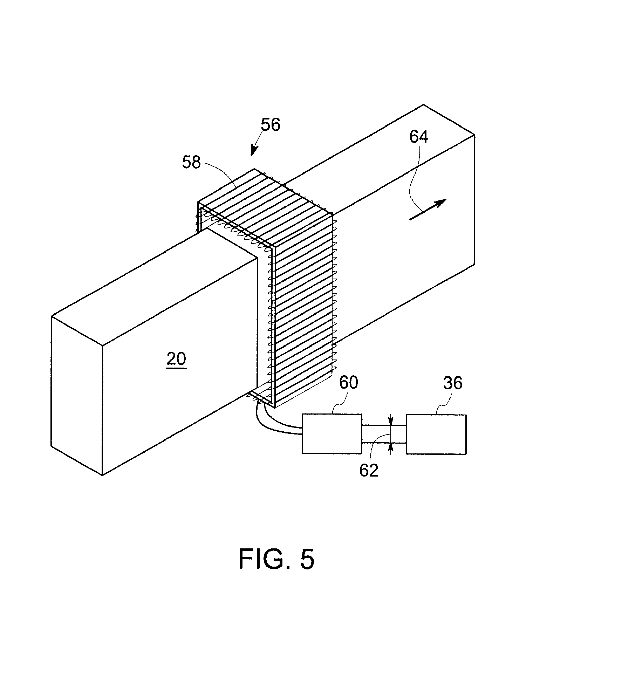

FIG. 5 illustrates an exemplary non-contact power supply implemented in the cooling mechanism of FIG. 2. In an exemplary embodiment, a non-contact pick-up coil 58 is disposed around the current carrying conductor 20. The pick-up coil is disposed perpendicular to the conductor 20 such that flux linkage with the concentric magnetic flux from the conductor 20 is maximized (via inductive pick-up.) Voltage induced via magnetic induction in the pick-up coil is proportional to flux linkage. The flux linkage may be increased by either increasing the number of turns of the coil or by winding the coil on a high permeability magnetic core. A controller 60 is coupled to the pick-up coil 58. In one embodiment, the controller includes an integrator, a filer, and other electronic components configured to provide electrical power to the micro-pump 36.

In operation, the current carrying conductor 20 carrying high ampere current produces magnetic flux. The power supply 56 is a self-regulated power supply having an output voltage 62 directly proportional to the current 64 flowing in the conductor 20. The micro-pump 36 powered by power supply 56, will automatically initiate the operation once the current 64 flowing through the conductor 20 increases beyond a threshold. Also, the speed increases with increase in the amount of current 64. The self-regulating pump circulates more heat exchange fluid (increased flow rate) through the fluid path as the current 64 increases. It may be noted that use of sensors to detect current flow is avoided by non-contact power supply and configured to self-regulating the speed (and in turn flow rate) of the micro-pump based on the current flow in the conductor 20.

Advantageously, such self regulating mechanism employed for cooling bus bars provide closed loop control on regulation of heat dissipation. Further, absence of condenser makes the cooling mechanism simple to maintain and reduce installation cost. Bus bars and current carrying conductors implementing such systems drive higher current density and help reduce the overall size of the system. Also, cooling mechanism as discussed above is easily retrofit on existing bus bar and switchgear installations. Accordingly, modular based systems can be built based on the bus bar size. Further, interconnect joints have high temperature that limit the current carrying capacity. Such modular design enables addressing specific hot pockets effective by localized cooling. Systems implementing such localized cooling mechanism have reduced by the temperature of the bus bars up to about 50%.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A cooling mechanism for a current carrying conductor comprising:
a first layer having plurality of micro fluidic channels, the first layer thermally coupled to the current carrying conductor and configured to exchange thermal energy; and
a micro-pump to circulate a heat exchange fluid through the micro fluidic channels to exchange thermal energy with the first layer and remove heat from the current carrying conductor, wherein the heat exchange fluid and the current carrying conductor are electrically isolated.

2. The cooling mechanism of claim 1, wherein the first layer comprises open porous structure and plurality of air voids disposed around micro fluidic channels.

3. The cooling mechanism of claim 1 or claim 2, wherein the heat exchange fluid comprises a phase changing material.

4. The cooling mechanism of any preceding claim, wherein the micro-pump is driven by a non-contact power supply.

5. The cooling mechanism of claim 4, wherein the non-contact power supply is coupled to a pick-up coil configured for an inductive pick-up around the current carrying conductor.

6. The cooling mechanism of any preceding claim, wherein the pump is configured to regulate a flow rate of the heat exchange fluid.

7. A heat exchanger to cool a current carrying conductor comprising:
a heat exchange layer thermally coupled to the current carrying conductor and comprising one of more micro fluidic channels;
a fluid path within the micro fluidic channels to transmit a heat exchange fluid;
a plurality of air voids disposed around the micro fluidic channels in thermal communication with the fluid path; and
a self-regulating pump configured to circulate the heat exchange fluid through the fluid path.

8. The heat exchanger of claim 7, wherein the self-regulating pump is further configured to adapt a flow rate based upon the current flowing in the current carrying conductor.

9. A method of cooling a current carrying conductor comprising:
coupling a heat exchange layer around the current carrying conductor, the heat exchange layer thermally coupled to the current carrying conductor and electrically isolated from the current carrying conductor;
providing a fluid path via plurality of micro-fluidic channels defined in the heat exchange layer having open porous structure;
circulating a heat exchange fluid having a phase changing material within the fluid path;
cooling a heat from the current carrying conductor by thermal exchange through the heat exchange layer; and
cooling the heat exchange layer via circulating the heat exchange fluid in micro-fluidic channels coupled to air voids.

10. A retrofit cooling apparatus configured to manage thermal aspect of a current carrying conductor, the apparatus comprising:
a first layer thermally coupled to the current carrying conductor and electrically isolated;
a plurality of micro fluidic channels defined within the first layer;
a dielectric heat exchange fluid configured to flow within the micro-fluidic channels and in contact with the current carrying conductor; and
a micro-pump configured to re-circulate the dielectric heat exchange fluid to transfer thermal energy from the current carrying conductor to an ambient via the micro-fluidic channels.
